# EUROPEAN PATENT APPLICATION

(11) **EP 4 599 997 A1**
(43) Date of publication of application: **13.08.2025**
(21) Application number: 23874821.4
(22) Date of filing: 02.10.2023
(51) Int. Cl.: B25J 13/00, G05B 19/18

(54) **ROBOT CONTROL SYSTEM AND ROBOT CONTROL METHOD**

(30) Priority: 05.10.2022 JP 2022160756
(71) Applicant: KAWASAKI JUKOGYO KABUSHIKI KAISHA, Kobe-shi, Hyogo 650-8670 (JP)
(72) Inventor: KOYAMA, Masataka, Hyogo 650-8670 (JP); KITAHARA, Katsuyuki, Hyogo 650-8670 (JP); TAKAHASHI, Ippei, Hyogo 650-8670 (JP); SUZUKI, Hiroharu, Hyogo 650-8670 (JP); SHIMIZU, Takashi, Hyogo 673-8666 (JP)
(74) Representative: Bals & Vogel Patentanwälte PartGmbB
(86) International application number: PCT/JP2023/035923
(87) International publication number: WO 2024/075694

(57) **Abstract**

A robot control system includes: robot control circuitry that controls driving of a robot shaft of a robot and generates a control command value for an external shaft different from the robot shaft; an external motor; motor control circuitry that controls the external motor; and a pulse generator that converts a rotation amount of the external shaft, which is based on the control command value, into a pulse number corresponding to the rotation amount, and the motor control circuitry controls an output of the external motor based on a count number obtained by counting the pulse number obtained by the pulse generator.

## Description

### Technical Field

The present disclosure relates to a robot control system and a robot control method.

### Background Art

A robot including a joint or joints is controlled by a robot controller that controls a motor or motors which drive a robot shaft or robot shafts constituting the joint or the joints. As disclosed in, for example, PTL 1 below, the robot controller can also control an external shaft that serves as an operation shaft of peripheral equipment, such as a positioner or a slider, which is used to, for example, expand a movable range of the robot. A cooperative operation by the robot and the peripheral equipment is realized in such a manner that the robot controller controls the robot shaft and the external shaft.

### Citation List

### Patent Literature

PTL 1: Japanese Laid-Open Patent Application Publication No. 2014-217901

### Summary of Invention

### Technical Problem

However, the rated output of an external shaft motor that drives the external shaft controllable by the robot controller is limited by the rated output of the robot shaft. The robot controller includes servo amplifiers that supply electric power to the motor that drives the robot shaft and the external shaft motor that drives the external shaft. The capabilities of the servo amplifiers are the same as each other and are determined based on the specification of the robot. Therefore, the capability of the peripheral equipment driven by the external shaft is limited by the specification of the robot. Moreover, typically, the number of motors that can be controlled by one external shaft output is only one.

To eliminate the limitation of the external shaft motor, a control command may be transmitted from the robot controller to a controller of the peripheral equipment through communication, and the controller of the peripheral equipment may control an external motor. However, according to this method, signal conversion processing of converting the control command into a signal corresponding to a communication protocol used in a communication path is necessary for signal transmission in the communication path. Therefore, a delay due to the signal conversion processing and a delay at the time of the signal transmission in the communication path occur, and thus, it is difficult to make the peripheral equipment operate in synchronization with the robot.

Therefore, it is desired to make the peripheral equipment operate directly based on the control command from the robot controller. On the other hand, there is a problem that when the robot and the peripheral equipment are controlled by one robot controller as in PTL 1, the capability of the peripheral equipment is limited.

The present disclosure was made in light of the above, and an object of the present disclosure is to provide a robot control system and a robot control method each of which can synchronously control a robot and peripheral equipment by using a control command value generated by a robot controller without limiting the capability of the peripheral equipment.

### Solution to Problem

A robot control system according to one aspect of the present disclosure includes: robot control circuitry that controls driving of a robot shaft of a robot and generates a control command value for an external shaft different from the robot shaft; an external motor; motor control circuitry that controls the external motor; and a pulse generator that converts a rotation amount of the external shaft, which is based on the control command value, into a pulse number corresponding to this rotation amount, wherein the motor control circuitry controls an output of the external motor based on a count number obtained by counting the pulse number obtained by the pulse generator.

A robot control method according to another aspect of the present disclosure includes: converting a control command value into a pulse number, the control command value being output from robot control circuitry that controls driving of a robot shaft of a robot and being used to control driving of an external shaft different from the robot shaft, the pulse number corresponding to a rotation amount of the external shaft; and controlling an output of an external motor based on a count number obtained by counting the pulse number.

### Advantageous Effects of Invention

According to the present disclosure, the robot and the peripheral equipment can be synchronously controlled by using the control command value generated by the robot controller without limiting the capability of the peripheral equipment.

### Brief Description of Drawings

FIG. 1 is a block diagram showing the schematic configuration of a robot control system according to Embodiment 1 of the present disclosure.
FIG. 2 is a block diagram showing the schematic configuration of the robot control system according to Embodiment 2 of the present disclosure.
FIG. 3 is a block diagram showing the schematic configuration of the robot control system according to Embodiment 3 of the present disclosure.
FIG. 4 is a block diagram showing the schematic configuration of the robot control system according to Embodiment 4 of the present disclosure.
FIG. 5 is a block diagram showing the schematic configuration of the robot control system according to Embodiment 5 of the present disclosure.

### Description of Embodiments

Hereinafter, one embodiment will be described in detail with reference to the drawings. In the following description and the drawings, the same reference signs are used for the same or corresponding components, and the repetition of the same explanation is avoided.

### Embodiment 1

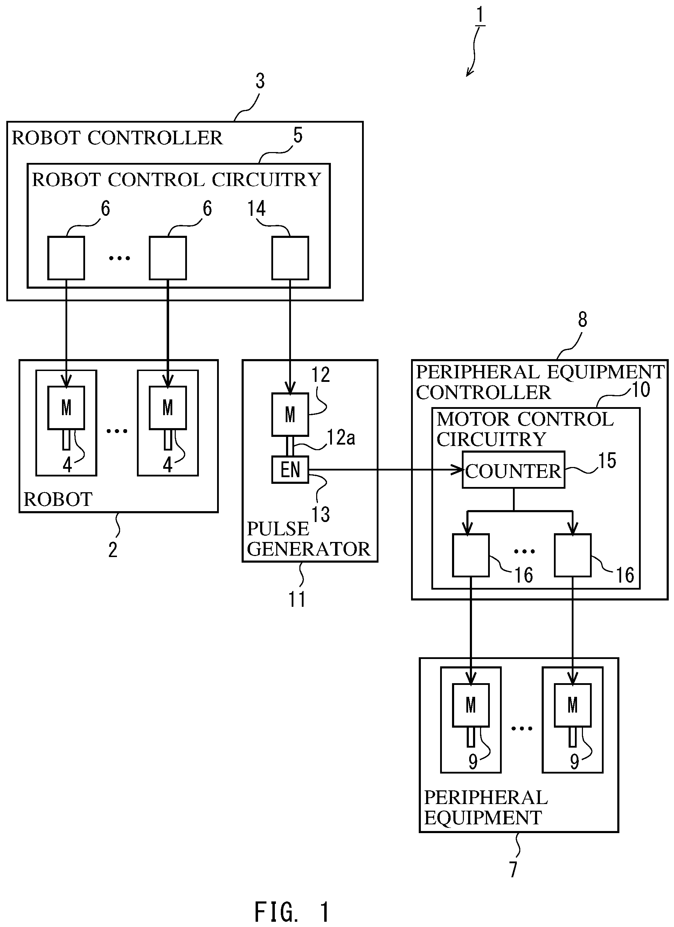

FIG. 1 is a block diagram showing the schematic configuration of a robot control system according to Embodiment 1 of the present disclosure. A robot control system 1 of the present embodiment includes a robot 2 and a robot controller 3. The robot 2 includes operation shafts, such as six shafts or seven shafts. Hereinafter, the operation shafts of the robot 2 are referred to as robot shafts. The robot 2 includes robot drive motors 4 that drive the respective robot shafts. For example, the robot drive motors 4 are servomotors. Examples of the robot 2 include working machines, such as an articulated robot, a linear motion shaft robot, and a parallel link robot, each of which includes the robot drive motor 4 or the robot drive motors 4.

The robot controller 3 includes robot control circuitry 5 that generates a robot control command value used to control the robot drive motor 4. The robot controller 3 includes a computer, such as a microcontroller or a PLC (Programmable Logic Controller). More specifically, the robot control circuitry 5 includes a processor, a memory, and a peripheral circuit. The processor includes, for example, a CPU, a MPU, or the like. The memory includes a ROM, a RAM, a register, and the like. The peripheral circuit includes an input/output interface, and the like. The robot controller 3 may include an inputter to which a user performs input, an outputter (for example, a monitor) which performs output display, or the like.

The robot control circuitry 5 generates control command values corresponding to the robot shafts based on the robot control command value. The robot control circuitry 5 includes signal output circuits 6 that output the control command values corresponding to the robot shafts. The robot controller 3 includes drive circuits that output, based on the control command values output from the signal output circuits 6, drive electric power to the corresponding robot drive motors 4. Each of the drive circuits includes, for example, a servo amplifier and the like.

The robot control command value includes a coordinate value that specifies the position and posture of a tip of the robot 2, i.e., a hand tip. The signal output circuits 6 calculate, as shaft command values for the robot shafts, the rotation amounts of the robot shafts which are necessary to set the position and posture of the hand tip from the current positions and postures of the robot shafts to the coordinate value specified by the robot control command value. The drive circuits output the drive electric power to the corresponding robot drive motors 4 based on the corresponding shaft command values.

Moreover, the robot control circuitry 5 generates a control command value for an external shaft different from the robot shaft. Hereinafter, the control command value for the external shaft is referred to as an external shaft control command value. The robot control circuitry 5 includes an external shaft signal output circuit 14 that outputs the external shaft control command value. The robot control system 1 includes peripheral equipment 7 and a peripheral equipment controller 8. The operation of the peripheral equipment 7 is controlled based on the external shaft control command value generated by the robot control circuitry 5. The external shaft control command value includes a coordinate value that specifies the position or angle of the peripheral equipment 7. The robot control circuitry 5 calculates, as a shaft command value for the external shaft, the rotation amount of the external shaft which is necessary to set the position or angle of the external shaft from the current position or angle of the external shaft to the coordinate value specified by the external shaft control command value.

The peripheral equipment 7 includes at least one motor. Hereinafter, the motor included in the peripheral equipment 7 is referred to as an external motor 9 so as to be distinguished from the robot drive motors 4. The peripheral equipment controller 8 includes motor control circuitry 10 that controls the external motor 9. The peripheral equipment controller 8 includes a computer, such as a microcontroller or a PLC (Programmable Logic Controller). More specifically, the motor control circuitry 10 includes a processor, a memory, and a peripheral circuit. The processor includes, for example, a CPU, a MPU, or the like. The memory includes a ROM, a RAM, a register, and the like. The peripheral circuit includes an input/output interface, and the like. The peripheral equipment controller 8 may include an inputter to which a user performs input, an outputter (for example, a monitor) which performs output display, or the like.

The functionality of the elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. In the description, the circuitry, units, means, or sections are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, units, or means are a combination of hardware and software, the software being used to configure the hardware and/or processor.

The robot control system 1 includes a pulse generator 11. The pulse generator 11 transmits the external shaft control command value, which has been output from the external shaft signal output circuit 14, to the motor control circuitry 10. To do this, the pulse generator 11 converts the rotation amount of the external shaft, which is based on the shaft command value for the external shaft, into a pulse number corresponding to this rotation amount.

In the present embodiment, the pulse generator 11 includes an external shaft motor 12 and an encoder 13. The robot controller 3 includes an external shaft motor drive circuit that supplies electric power to the external shaft motor 12 based on the external shaft control command value output from the external shaft signal output circuit 14. The external shaft motor 12 is driven by the external shaft motor drive circuit. The encoder 13 detects the rotation amount of an external shaft 12a rotated by the external shaft motor 12. The pulse generator 11 outputs the pulse number, which corresponds to the rotation amount of the external shaft 12a, based on the output of the encoder 13. For example, the pulse generator 11 outputs a pulse signal including a pulse wave which has a predetermined pulse width and the pulse number corresponding to the rotation amount.

The motor control circuitry 10 of the peripheral equipment controller 8 includes a counter 15 and at least one external motor command value output circuit 16, the number of external motor command value output circuits 16 corresponding to the number of external motors 9. The peripheral equipment controller 8 includes at least one drive circuit that outputs, based on the external motor command value output from the external motor command value output circuit 16, drive electric power to the corresponding external motor 9. The drive circuit includes, for example, a servo amplifier and the like. The motor control circuitry 10 acquires the pulse number output from the pulse generator 11, and the counter 15 counts the pulse number. Each external motor command value output circuit 16 outputs the external motor command value, which is used to drive the corresponding external motor 9, based on a count number obtained by the counter 15.

According to the above configuration, the rotation amount of the external shaft 12a is converted into the pulse number corresponding to this rotation amount based on the external shaft control command value generated by the robot control circuitry 5, and the pulse number is input to the motor control circuitry 10. At this time, the motor control circuitry 10 uses the input value itself, which is based on the external shaft control command value, i.e., the pulse number itself as the control command value used to control the external motor 9. Therefore, the motor control circuitry 10 does not have to perform signal conversion processing for communication between the robot control circuitry 5 and the motor control circuitry 10 and does not have to perform calculation for generating the control command value used to control the external motor 9. Therefore, the motor control circuitry 10 can drive the external motor 9 by a small amount of calculation processing with respect to the control command value generated by the robot control circuitry 5. Thus, the motor control circuitry 10 can drive the external motor 9 based on the external shaft control command value without delay. As a result, the robot 2 and the peripheral equipment 7 including the external motor 9 can be synchronously controlled based on the control command value generated by the robot control circuitry 5.

In addition, the drive circuit that drives the external motor 9 based on the external motor command value output from the external motor command value output circuit 16 is not limited by the capability of the drive circuit that drives the external shaft motor 12 based on the external shaft command value output from the external shaft signal output circuit 14 of the robot control circuitry 5. Therefore, the rated output of the external motor 9 can be set in accordance with the specification of the peripheral equipment 7 to be operated without being limited by the rated output of the robot drive motor 4 that drives the robot shaft. Moreover, a plurality of external motors 9 can be driven based on the external shaft control command value for one external shaft. Therefore, one operation shaft in the peripheral equipment 7 can be driven by the plurality of external motors 9.

As above, according to the robot control system 1 of the present embodiment, the robot 2 and the peripheral equipment 7 can be synchronously controlled by using the control command value generated by the robot controller 3 without limiting the capability of the peripheral equipment 7.

Moreover, according to the present embodiment, the pulse generator 11 includes the external shaft motor 12 and the encoder 13 that detects the rotation amount of the external shaft 12a rotated by the external shaft motor 12. Thus, the pulse number to be transmitted to the motor control circuitry 10 can be generated based on an actual operation amount of the external shaft motor 12. Therefore, synchronous control between the robot 2 and the peripheral equipment 7 in which the rated output of the external motor 9 is not limited can be easily realized by using an existing configuration regarding the external shaft 12a as the pulse generator 11.

As described above, the rated output of the external motor 9 is not limited by the rated output of the external shaft motor 12 which is limited by the rated output of the robot drive motor 4 that drives the robot shaft. Therefore, the external motor 9 includes motors, a total value of the rated outputs of the motors being larger than the rated output of the external shaft motor 12 that is controllable by the robot control circuitry 5. Or, one motor whose rated output is larger than the rated output of the external shaft motor 12 may be adopted as the external motor 9.

### Embodiment 2

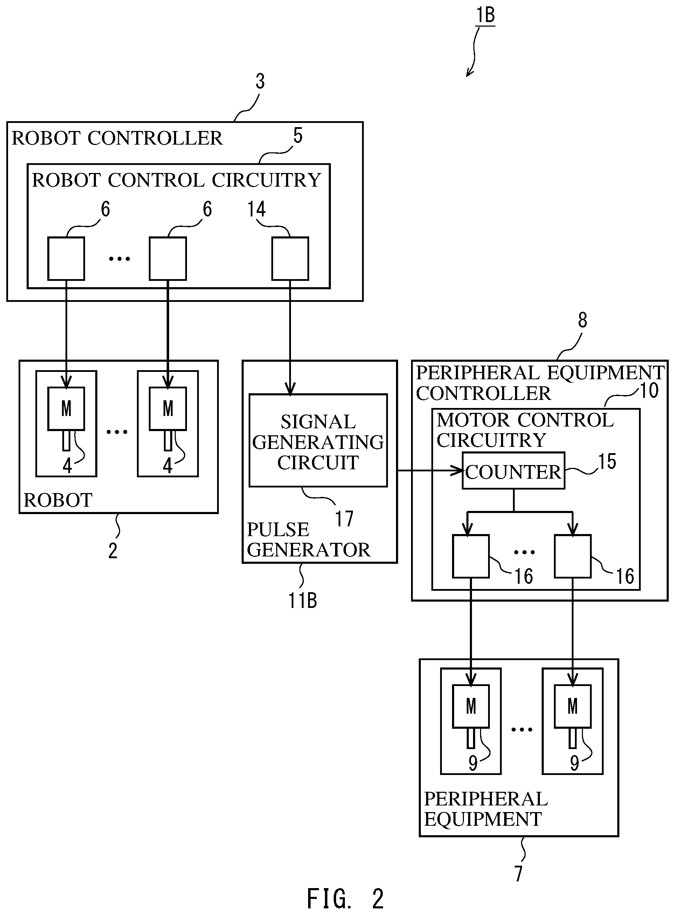

FIG. 2 is a block diagram showing the schematic configuration of the robot control system according to Embodiment 2 of the present disclosure. Regarding a robot control system 1B of the present embodiment, the same reference signs are used for the similar components to the robot control system 1 of Embodiment 1, and the repetition of the same explanation is avoided. The robot control system 1B of the present embodiment is different from the robot control system 1 of Embodiment 1 in that a pulse generator 11B includes a signal generating circuit 17 that generates the pulse signal having the pulse number from the external shaft control command value. The robot control system 1B does not have to include: the external shaft motor driven based on the external shaft command value output from the external shaft signal output circuit 14; and the drive circuit that drives the external shaft motor.

The signal generating circuit 17 may include a processor, a memory, and a peripheral circuit. The processor includes, for example, a CPU, a MPU, or the like. The signal generating circuit 17 performs predetermined pulse conversion with respect to the shaft command value for the external shaft which is output from the external shaft signal output circuit 14 of the robot control circuitry 5, to generate a pulse command value including the pulse number corresponding to the shaft command value. The signal generating circuit 17 generates, based on the pulse command value, the pulse signal including pulses of the pulse number corresponding to the shaft command value.

In the present embodiment, in the signal generating circuit 17, the rotation amount of the external shaft is converted into the pulse number corresponding to this rotation amount based on the external shaft control command value for the external shaft 12a which is generated by the robot control circuitry 5, and the pulse number is input to the motor control circuitry 10. Therefore, the motor control circuitry 10 can drive the external motor 9 by a small amount of calculation processing with respect to the control command value generated by the robot control circuitry 5. Thus, the robot 2 and the peripheral equipment 7 including the external motor 9 can be synchronously controlled based on the control command value generated by the robot control circuitry 5. Moreover, in the present embodiment, since it is unnecessary to actually drive the external shaft motor 12, the power consumption can be reduced.

In the present embodiment, the signal generating circuit 17 constituting the pulse generator 11B is constituted independently from the robot control circuitry 5 and the motor control circuitry 10. However, the present embodiment is not limited to this. For example, the signal generating circuit 17 may be located inside the robot controller 3. Moreover, in this case, the signal generating circuit 17 may be constituted as part of the robot control circuitry 5. For example, one processor may generate the external shaft control command value and perform the pulse conversion. Moreover, for example, the signal generating circuit 17 may be located inside the peripheral equipment controller 8. Furthermore, in this case, the signal generating circuit 17 may be constituted as part of the motor control circuitry 10.

### Embodiment 3

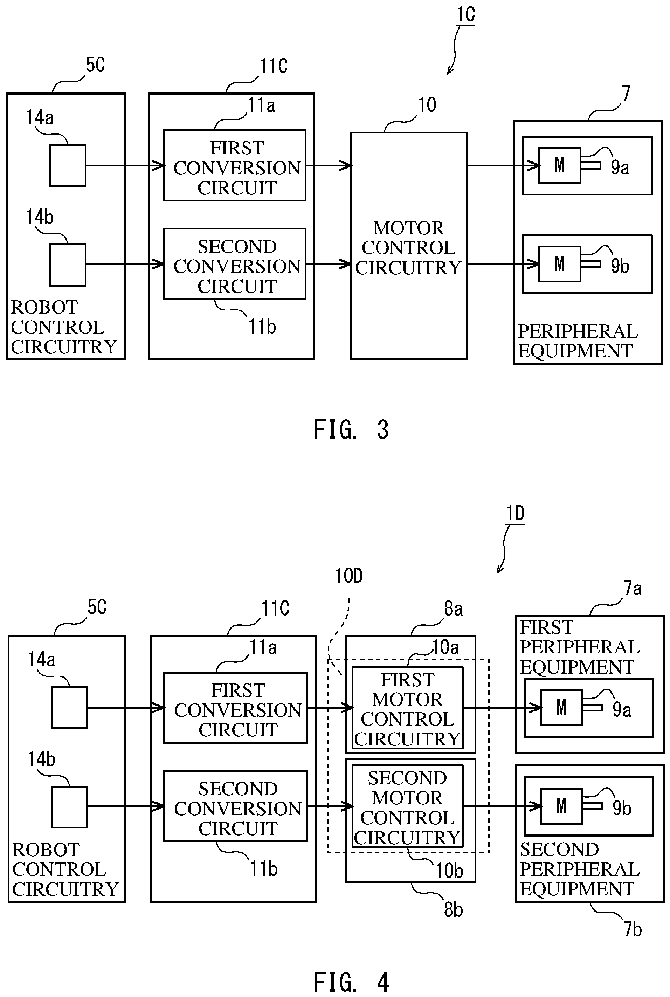

FIG. 3 is a block diagram showing the schematic configuration of the robot control system according to Embodiment 3 of the present disclosure. Regarding a robot control system 1C of the present embodiment, the same reference signs are used for the similar components to the robot control system 1 of Embodiment 1, and the repetition of the same explanation is avoided. FIG. 3 shows robot control circuitry 5C, a pulse generator 11C, the motor control circuitry 10, and the peripheral equipment 7 and does not show some components, such as the robot 2.

The robot control system 1C of the present embodiment is different from the robot control system 1 of Embodiment 1 in that: the robot control circuitry 5C can output the external shaft control command values for a plurality of external shafts; and the pulse generator 11C includes conversion circuits, the number of which corresponds to the number of external shafts. In the example of FIG. 3, the robot control circuitry 5C includes: a first external shaft output circuit 14a that outputs a first external shaft command value for a first external shaft; and a second external shaft output circuit 14b that outputs a second external shaft command value for a second external shaft.

In this case, the peripheral equipment 7 includes a first external motor 9a and a second external motor 9b. The first external motor 9a and the second external motor 9b constitute respective driving shafts different from each other. For example, the first external motor 9a may be constituted as the driving shaft of a positioner, and the second external motor 9b may be constituted as the driving shaft of a slider.

The pulse generator 11C includes a first conversion circuit 11a and a second conversion circuit 11b. The first conversion circuit 11a converts the rotation amount of the first external shaft, which is based on the external shaft control command value for the first external shaft, into a first pulse number corresponding to this rotation amount and outputs the first pulse number as a control signal of the first external motor 9a to the motor control circuitry 10. The second conversion circuit 11b converts the rotation amount of the second external shaft, which is based on the external shaft control command value for the second external shaft, into a second pulse number corresponding to this rotation amount and outputs the second pulse number as a control signal of the second external motor 9b to the motor control circuitry 10.

In the present embodiment, the rated outputs of the external motors 9a and 9b are not limited by the rated output of the robot drive motor 4 that drives the robot shaft. Therefore, the first external motors 9a may be controlled by the output of the first conversion circuit 11a. Similarly, the second external motors 9b may be controlled by the output of the second conversion circuit 11b.

In the present embodiment, one pulse generator 11C includes the first conversion circuit 11a and the second conversion circuit 11b. However, the robot control system 1C may include: a first pulse generator including the first conversion circuit 11a; and a second pulse generator including the second conversion circuit 11b. Moreover, in the present embodiment, one piece of peripheral equipment 7 includes the first external motor 9a and the second external motor 9b, i.e., one piece of peripheral equipment 7 includes two operation shafts different from each other. However, the first external motor 9a and the second external motor 9b may be constituted as operation shafts of pieces of peripheral equipment 7 different from each other. To be specific, first peripheral equipment may include the first external motor 9a, and second peripheral equipment may include the second external motor 9b. Moreover, the number of external shaft outputs may be larger than two.

### Embodiment 4

FIG. 4 is a block diagram showing the schematic configuration of the robot control system according to Embodiment 4 of the present disclosure. Regarding a robot control system 1D of the present embodiment, the same reference signs are used for the similar components to the robot control system 1C of Embodiment 3, and the repetition of the same explanation is avoided.

The robot control system 1D of the present embodiment is different from the robot control system 1C of Embodiment 3 in that motor control circuitry 10D includes pieces of motor control circuitry, the number of which corresponds to the number of external shafts. More specifically, the motor control circuitry 10D includes: first motor control circuitry 10a that controls the output of the first external motor 9a based on the count number obtained by counting the first pulse number; and second motor control circuitry 10b that controls the output of the second external motor 9b based on the count number obtained by counting the second pulse number.

Moreover, in the present embodiment, the first external motor 9a and the second external motor 9b are constituted as the operation shafts of pieces of peripheral equipment 7 different from each other. To be specific, the robot control system 1D includes: first peripheral equipment 7a including the first external motor 9a; and second peripheral equipment 7b including the second external motor 9b. In this case, a first peripheral equipment controller 8a that controls the first peripheral equipment 7a and a second peripheral equipment controller 8b that controls the second peripheral equipment 7b may be controllers different from each other. As above, the motor control circuitry 10D may include the first motor control circuitry 10a of the first peripheral equipment controller 8a and the second motor control circuitry 10b of the second peripheral equipment controller 8b.

In the present embodiment, as with Embodiment 3, one piece of peripheral equipment 7 may include the first external motor 9a and the second external motor 9b. Moreover, the motor control circuitry 10D in one peripheral equipment controller 8 may include the first motor control circuitry 10a and the second motor control circuitry 10b. Furthermore, the number of external shaft outputs may be larger than two.

### Embodiment 5

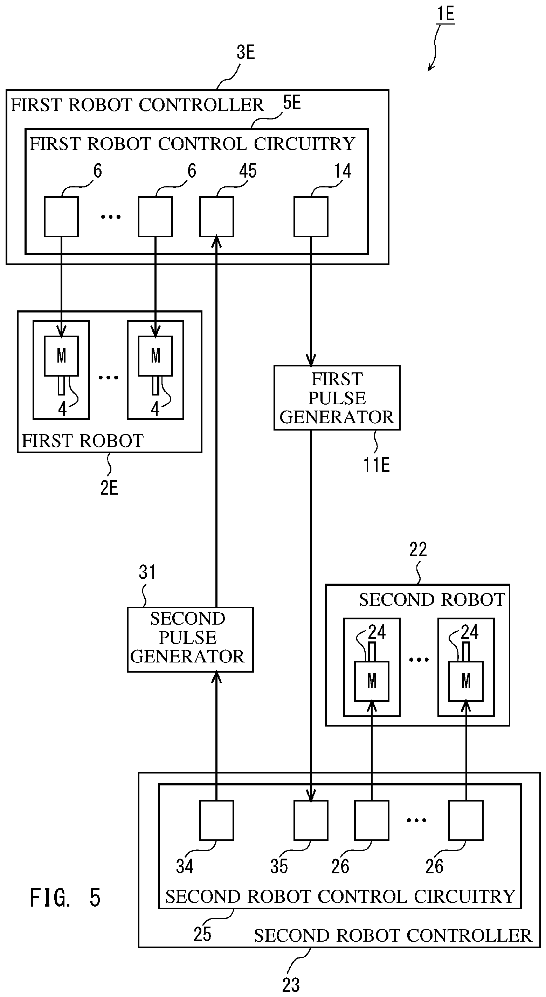

FIG. 5 is a block diagram showing the schematic configuration of the robot control system according to Embodiment 5 of the present disclosure. Regarding a robot control system 1E of the present embodiment, the same reference signs are used for the similar components to the robot control system 1 of Embodiment 1, and the repetition of the same explanation is avoided.

The robot control system 1E of the present embodiment is different from the robot control system 1 of Embodiment 1 in that the peripheral equipment is another robot. The robot control system 1E includes a first robot 2E and a second robot 22 as the robots. Moreover, the robot control system 1E includes, as the robot controllers, a first robot controller 3E for the first robot 2E and a second robot controller 23 for the second robot 22. The first robot controller 3E includes first robot control circuitry 5E that controls a first robot shaft that is a robot shaft of the first robot 2E. The first robot control circuitry 5E is similar in configuration to the robot control circuitry 5 of Embodiment 1 except for a below-described counter 45. In the present embodiment, the external shaft control command value for the external shaft of the first robot 2E which is output from the external shaft signal output circuit 14 is referred to as a first external shaft control command value.

The second robot controller 23 includes second robot control circuitry 25 that controls second robot shafts that are the robot shafts of the second robot 22. The second robot control circuitry 25 is also similar in configuration to the first robot control circuitry 5E. To be specific, the second robot control circuitry 25 includes signal output circuits 26 that output control command values to the second robot shafts based on the robot control command value. The second robot controller 23 includes a drive circuit that outputs, based on the control command values output from the signal output circuits 26, drive electric power to corresponding second robot drive motors 24. The drive circuit includes, for example, a servo amplifier and the like. Moreover, the second robot control circuitry 25 includes an external shaft signal output circuit 34 that outputs a second external shaft control command value for an external shaft different from the second robot shaft.

The second robot drive motor 24 of the present embodiment corresponds to the external motor 9 of Embodiment 1, and the second robot control circuitry 25 of the present embodiment corresponds to the motor control circuitry 10 of Embodiment 1.

Moreover, in the present embodiment, the robot control system 1E includes a first pulse generator 11E and a second pulse generator 31 as the pulse generators. The first pulse generator 11E outputs the pulse number corresponding to the rotation amount of the external shaft of the first robot 2E based on the first external shaft control command value. The second pulse generator 31 outputs the pulse number corresponding to the rotation amount of the external shaft of the second robot 22 based on the second external shaft control command value.

Each of the first pulse generator 11E and the second pulse generator 31 is similar in configuration to the pulse generator 11 of Embodiment 1 or the pulse generator 11B of Embodiment 2.

The second robot control circuitry 25 controls the outputs of the second robot shafts based on the count number obtained by counting the pulse number output from the first pulse generator 11E. To do this, the second robot control circuitry 25 includes a counter 35. The second robot control circuitry 25 acquires the pulse number output from the first pulse generator 11E, and the counter 35 counts this pulse number. Based on the count number obtained by the counter 35, the signal output circuit 26 of the second robot control circuitry 25 outputs the control command values used to drive the second robot shafts.

Moreover, the first robot control circuitry 5E controls the outputs of the first robot shafts based on the count number obtained by counting the pulse number output from the second pulse generator 31. To do this, the first robot control circuitry 5E includes the counter 45.
The first robot control circuitry 5E acquires the pulse number output from the second pulse generator 31, and the counter 45 counts the pulse number. Based on the count number obtained by the counter 45, the signal output circuits 6 of the first robot control circuitry 5E output the control command values used to drive the first robot shafts.

For example, as the second external shaft control command value, the external shaft signal output circuit 34 of the second robot control circuitry 25 outputs current values of the second robot shafts which indicate a movement distance of the second robot 22 controlled based on the first external shaft control command value output from the first robot control circuitry 5E, current positions or postures of the second robot shafts, or the like.

According to the present embodiment, the second robot 22 that operates as the peripheral equipment of the first robot 2E is controlled based on the first external shaft control command value generated by the first robot control circuitry 5E that controls the first robot 2E. Moreover, the first robot 2E is controlled based on the second external shaft control command value generated by the second robot control circuitry 25 that controls the second robot 22. For example, the current value of the second robot shaft is fed back to the first robot control circuitry 5E as the pulse number corresponding to the rotation amount of the second robot shaft. Thus, the cooperative operation by the robots 2E and 22 can be appropriately performed. Moreover, the rated output of the second robot drive motor 24 that drives each second robot shaft of the second robot 22 can be made larger than the rated output of the first robot drive motor 4 that drives each first robot shaft of the first robot 2E. To be specific, the cooperative operation by robots whose rated outputs are different from each other can be performed without delay.

The present embodiment has described the robot control system 1E in which the two robots 2E and 22 perform the cooperative operation. However, a plurality of second robots may operate as pieces of peripheral equipment of the first robot 2E. To be specific, the robot control system may include three or more robots.

### Other Embodiments

The foregoing has described the embodiments of the present disclosure. However, the present disclosure is not limited to the embodiments, and improvements, modifications, and corrections may be made within the scope of the present disclosure.

For example, the above embodiments may be combined with each other. For example, in Embodiments 3, 4, and 5, each of the pulse generators 11 and 11C may include the external shaft motor 12 and the encoder 13 as in Embodiment 1 or may include the signal generating circuit 17 as in Embodiment 2. Moreover, for example, in the robot control systems 1, 1B, 1C, and 1D of Embodiments 1, 2, 3, and 4, the robot control circuitry 5 may acquire the current value of the peripheral equipment 7 through the second pulse generator as in Embodiment 5. Furthermore, for example, the robot control system 1E of Embodiment 5 may include the pulse generators, the number of which corresponds to the number of external shaft outputs or the number of robot drive motors as in Embodiment 3 or 4.

Moreover, the connection between the pulse generator 11, 11B, 11C and the motor control circuitry 10, 10D may be wired connection or optical connection. For example, each of the pulse generators 11, 11B, and 11C may include a light emitting element that performs optical output corresponding to the pulse number, and each of the pieces of motor control circuitry 10 and 10D may include a light receiving element that converts the light of the light emitting element into an electric signal. An optical transmission cable, such as an optical fiber, may be located between the light emitting element and the light receiving element. Moreover, for example, the pulse generator 11, 11B, 11C and the motor control circuitry 10, 10D may be connected to each other through a photocoupler. When the pulse generator 11, 11B, 11C and the motor control circuitry 10, 10D are optically connected to each other, the robot 2, 2E and the peripheral equipment 7, 7a, 7b can be synchronously controlled, or the robot 2, 2E and the robot 22 can be synchronously controlled even if the robot 2, 2E is located away from the peripheral equipment 7, 7a, 7b or the robot 22.

### Conclusion of Present Disclosure

### First Aspect

A robot control system according to one aspect of the present disclosure includes: robot control circuitry that controls driving of at least one robot shaft of a robot and generates a control command value for an external shaft different from the robot shaft; an external motor; motor control circuitry that controls the external motor; and a pulse generator that converts a rotation amount of the external shaft, which is based on the control command value, into a pulse number corresponding to this rotation amount, wherein the motor control circuitry controls an output of the external motor based on a count number obtained by counting the pulse number obtained by the pulse generator.

According to the above configuration, the rotation amount of the external shaft is converted into the pulse number corresponding to this rotation amount based on the control command value for the external shaft which is generated by the robot control circuitry, and the pulse number is input to the motor control circuitry. At this time, the motor control circuitry uses the input value itself, which is based on the control command value for the external shaft, i.e., the pulse number itself as the control command value used to control the external motor. Therefore, the motor control circuitry does not have to perform signal conversion processing for communication between the robot control circuitry and the motor control circuitry and does not have to perform calculation for generating the control command value used to control the external motor. Therefore, the motor control circuitry can drive the external motor by a small amount of calculation processing with respect to the control command value generated by the robot control circuitry. Thus, the motor control circuitry can drive the external motor based on the control command value for the external shaft without delay. As a result, the robot and the peripheral equipment including the external motor can be synchronously controlled based on the control command value generated by the robot control circuitry.

In addition, the rated output of the external motor can be set in accordance with the specification of the peripheral equipment to be operated without being limited by the rated output of the robot drive motor that drives the robot shaft. Moreover, a plurality of external motors can be driven based on the control command value for one external shaft. Therefore, one operation shaft in the peripheral equipment can be driven by the plurality of external motors.

As above, the robot and the peripheral equipment can be synchronously controlled by using the control command value generated by the robot control circuitry without limiting the capability of the peripheral equipment.

### Second Aspect

In the robot control system according to the first aspect, the pulse generator may include: an external shaft motor that drives the external shaft based on the control command value; and an encoder that detects the rotation amount of the external shaft rotated by the external shaft motor, and the pulse generator may output the pulse number based on an output of the encoder. According to this, the pulse number to be transmitted to the motor control circuitry can be generated based on an actual operation amount of the external shaft motor. Therefore, synchronous control between the robot and the peripheral equipment in which the rated output of the external motor is not limited can be easily realized by using an existing configuration regarding the external shaft as the pulse generator.

### Third Aspect

In the robot control system according to the first aspect, the pulse generator may include a signal generating circuit that generates a pulse signal including the pulse number from the control command value. According to this, the control command value for the external shaft which is generated by the robot control circuitry is converted into the pulse number by the signal generating circuit, and the pulse number is transmitted to the motor control circuitry. Thus, the robot and the peripheral equipment including the external motor can be synchronously controlled based on the control command value generated by the robot control circuitry. Moreover, in the present embodiment, since it is unnecessary to actually drive the external shaft motor, the power consumption can be reduced.

### Fourth Aspect

In the robot control system according to any one of the first to third aspects, the external motor may include: one motor, a rated output of which is larger than a rated output of an external shaft motor that is controllable by the robot control circuitry; or motors, a total value of rated outputs of which is larger than the rated output of the external shaft motor.

### Fifth Aspect

In the robot control system according to any one of the first to fourth aspects, the external motor may include a first external motor and a second external motor, and the pulse generator may include: a first conversion circuit that converts a rotation amount of a first external shaft, which is based on a control command value for the first external shaft, into a first pulse number and outputs the first pulse number as a control signal of the first external motor to the motor control circuitry; and a second conversion circuit that converts a rotation amount of a second external shaft, which is based on a control command value for the second external shaft, into a second pulse number and outputs the second pulse number as a control signal of the second external motor to the motor control circuitry.

### Sixth Aspect

In the robot control system according to the fifth aspect, the motor control circuitry may include: first motor control circuitry that controls an output of the first external motor based on a count number obtained by counting the first pulse number; and second motor control circuitry that controls an output of the second external motor based on a count number obtained by counting the second pulse number.

### Seventh Aspect

In the robot control system according to any one of the first to sixth aspects, the robot may include a first robot and a second robot, the robot control circuitry may include first robot control circuitry that controls a first robot shaft of the first robot and second robot control circuitry that controls a second robot shaft of the second robot, the external motor may include a motor that drives a robot shaft of the second robot, the motor control circuitry may include the second robot control circuitry, the pulse generator may include a first pulse generator that outputs a pulse number corresponding to a rotation amount of an external shaft of the first robot based on a first external shaft control command value used to control driving of the external shaft of the first robot and a second pulse generator that outputs a pulse number corresponding to a rotation amount of an external shaft of the second robot based on a second external shaft control command value used to control driving of the external shaft of the second robot, the second robot control circuitry may control an output of the second robot shaft based on a count number obtained by counting the pulse number output from the first pulse generator, and the first robot control circuitry may control an output of the first robot shaft based on a count number obtained by counting the pulse number output from the second pulse generator.

According to the above configuration, the second robot that operates as the peripheral equipment of the first robot is controlled based on the first external shaft control command value generated by the first robot control circuitry that controls the first robot. Moreover, the first robot is controlled based on the second external shaft control command value generated by the second robot control circuitry that controls the second robot. Thus, the cooperative operation by the robots can be appropriately performed. Moreover, the rated output of the second robot drive motor that drives each second robot shaft of the second robot can be made larger than the rated output of the first robot drive motor that drives each first robot shaft of the first robot. To be specific, the cooperative operation by robots whose rated outputs are different from each other can be performed without delay.

### Eighth Aspect

A robot control method according to another aspect of the present disclosure includes: converting a control command value into a pulse number, the control command value being output from robot control circuitry that controls driving of at least one robot shaft of a robot and being used to control driving of an external shaft different from the robot shaft, the pulse number corresponding to a rotation amount of the external shaft; and controlling an output of an external motor based on a count number obtained by counting the pulse number.

### Reference Signs List

1, 1B, 1C, 1D, 1E robot control system
2 robot
2E first robot
5, 5C robot control circuitry
5E first robot control circuitry
9, 9a, 9b external motor
10, 10D motor control circuitry
11, 11B, 11C pulse generator
11E first pulse generator
12 external shaft motor
12a external shaft
13 encoder
17 signal generating circuit
22 second robot
25 second robot control circuitry
31 second pulse generator

## Claims

1. A robot control system comprising:
robot control circuitry that controls driving of a robot shaft of a robot and generates a control command value for an external shaft different from the robot shaft;
an external motor;
motor control circuitry that controls the external motor; and
a pulse generator that converts a rotation amount of the external shaft, which is based on the control command value, into a pulse number corresponding to this rotation amount, wherein
the motor control circuitry controls an output of the external motor based on a count number obtained by counting the pulse number obtained by the pulse generator.

2. The robot control system according to claim 1, wherein:
the pulse generator includes
an external shaft motor that drives the external shaft based on the control command value and
an encoder that detects the rotation amount of the external shaft rotated by the external shaft motor; and
the pulse generator outputs the pulse number based on an output of the encoder.

3. The robot control system according to claim 1, wherein the pulse generator includes a signal generating circuit that generates a pulse signal including the pulse number from the control command value.

4. The robot control system according to any one of claims 1 to 3, wherein the external motor includes:
one motor, a rated output of which is larger than a rated output of an external shaft motor that is controllable by the robot control circuitry; or
motors, a total value of rated outputs of which is larger than the rated output of the external shaft motor.

5. The robot control system according to any one of claims 1 to 3, wherein:
the external motor includes a first external motor and a second external motor; and
the pulse generator includes
a first conversion circuit that converts a rotation amount of a first external shaft, which is based on a control command value for the first external shaft, into a first pulse number and outputs the first pulse number as a control signal of the first external motor to the motor control circuitry and
a second conversion circuit that converts a rotation amount of a second external shaft, which is based on a control command value for the second external shaft, into a second pulse number and outputs the second pulse number as a control signal of the second external motor to the motor control circuitry.

6. The robot control system according to claim 5, wherein the motor control circuitry includes:
first motor control circuitry that controls an output of the first external motor based on a count number obtained by counting the first pulse number; and
second motor control circuitry that controls an output of the second external motor based on a count number obtained by counting the second pulse number.

7. The robot control system according to any one of claims 1 to 3, wherein:
the robot includes a first robot and a second robot;
the robot control circuitry includes
first robot control circuitry that controls a first robot shaft of the first robot and
second robot control circuitry that controls a second robot shaft of the second robot;
the external motor includes a motor that drives a robot shaft of the second robot;
the motor control circuitry includes the second robot control circuitry;
the pulse generator includes
a first pulse generator that outputs a pulse number corresponding to a rotation amount of an external shaft of the first robot based on a first external shaft control command value used to control driving of the external shaft of the first robot and
a second pulse generator that outputs a pulse number corresponding to a rotation amount of an external shaft of the second robot based on a second external shaft control command value used to control driving of the external shaft of the second robot;
the second robot control circuitry controls an output of the second robot shaft based on a count number obtained by counting the pulse number output from the first pulse generator; and
the first robot control circuitry controls an output of the first robot shaft based on a count number obtained by counting the pulse number output from the second pulse generator.

8. A robot control method comprising:
converting a control command value into a pulse number, the control command value being output from robot control circuitry that controls driving of a robot shaft of a robot and being used to control driving of an external shaft different from the robot shaft, the pulse number corresponding to a rotation amount of the external shaft; and
controlling an output of an external motor based on a count number obtained by counting the pulse number.
